# EUROPEAN PATENT SPECIFICATION

(11) **EP 2 556 602 B1**
(45) Date of publication and mention of the grant of the patent: **02.06.2021**
(21) Application number: 11766098.5
(22) Date of filing: 04.04.2011
(51) Int. Cl.: H04L 5/00, H04L 1/00, H04B 7/26, H04W 74/00, H04W 84/04, H04W 88/08

(54) **SYSTEM, APPARATUS AND METHOD FOR INTERLEAVING DATA IN A RELAY PHYSICAL DOWNLINK CONTROL CHANNEL (R-PDCCH)**
SYSTEM, VORRICHTUNG UND VERFAHREN ZUR VERSCHACHTELUNG VON DATEN IN EINEM PHYSIKALISCHEN RELAIS-DOWNLINK-STEUERKANAL
SYSTÈME, APPAREIL ET PROCÉDÉ POUR UN ENTRELACEMENT DE DONNÉES DANS UN CANAL DE COMMANDE DE LIAISON DESCENDANTE PHYSIQUE DE RELAIS (R-PDCCH)

(30) Priority: 29.03.2011 US 201113074476; 05.04.2010 US 320901 P
(43) Date of publication of application: 13.02.2013
(73) Proprietor: Samsung Electronics Co., Ltd., Gyeonggi-do 443-742 (KR)
(72) Inventor: LIU, Lingjia, Collin County, Texas 75023 (US); ZHANG, Jianzhong, Dallas County, Texas 75063 (US); NAM, Young Han, Collin County, Texas 75080 (US); JI, Hyoung Ju, Seoul 138-908 (KR); CHO, Joon Young, Suwon-si Gyeonggi-do 443-744 (KR)
(74) Representative: Nederlandsch Octrooibureau
(86) International application number: PCT/KR2011/002326
(87) International publication number: WO 2011/126247

(56) References cited:
- US-A1- 2009 088 148
- US-A1- 2009 168 922
- US-A1- 2009 279 500
- US-A1- 2010 035 555
- MOTOROLA: "Relay Backhaul Design", 3GPP DRAFT; R1-093968 - BACKHAUL DESIGN FOR RELAYS VFINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388461, [retrieved on 2009-10-06]
- NEC GROUP: "Issues on Relay type 1 control design", 3GPP DRAFT; R1-093863 ISSUES ON RELAY TYPE 1 CONTROL DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388368, [retrieved on 2009-10-05]
- SAMSUNG: "R-PDCCH multiplexing and search space", 3GPP DRAFT; R1-100135 R-PDCCH MULTIPLEXING AND SEARCH SPACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417860, [retrieved on 2010-01-12]
- MOTOROLA: "3GPP TSG RAN1#50 R1-073373 Search Space Definition for L1/L2 Control Channels", , vol. R1-073373, no. 50 20 August 2007 (2007-08-20), pages 1-11, XP002512720, Retrieved from the Internet: URL:http://www.3gpp.org/ftp/tsg_ran/WG1_RL 1/TSGR1_50/Docs/R1-073373.zip [retrieved on 2009-01-29]
- MOTOROLA: "Search Space Definition: Reduced PDCCH Blind Detection for Split PDCCH Search Space", 3GPP DRAFT; R1-080079 - SPLIT SEARCH SPACE FOR REDUCED PDCCH BLIND DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080109, 9 January 2008 (2008-01-09), XP050108617, [retrieved on 2008-01-09]

## Description

### [Technical Field]

The present application relates generally to wireless communications and, more specifically, to a method, apparatus and system for interleaving data in the relay downlink physical control channel (R-PDCCH).

### [Background Art]

1) 3GPP Technical Report No. 36.814, version 0.4.1, "Further Advancements For E-UTRA Physical Layer Aspects"; 2) 3GPP No. R1-084357, Ericsson, "Efficient Support Of Relays Through MBSFN Subframes"; 3) 3GPP Technical Report No. 36.211, version 9.0.0, "Physical Channels And Modulation"; and 4) 3GPP Technical Report No. 36.212, version 8.5.0, "Multiplexing And Channel Coding".

The newest implementations of 3GPP and LTE wireless networks support the use of wireless relay stations (or relays) to transmit data between a base station (also called eNodeB) and a mobile station (MS), which may also be referred to as user equipment (UE), remote terminal (RT), subscriber station (SS) or the like. A base station (BS) transmits and receives data from both relays and mobile stations. The transmission link between a base station and a relay is called a backhaul link (or Un link). A relay forwards the data received from a base station to a mobile station (identified as a relay MS) which has a link (Uu link) to the corresponding relay. The relay also forward received data from the relay MS to the base station.

A relay may be wirelessly connected to a radio-access network and the connection may be in-band or out-of-band. For in-band relaying, the BS-to-relay link operates in the same frequency spectrum as the relay-to-MS link. Because a relay transmitter may cause interference to its own receiver, simultaneous BS-to-relay and relay-to-MS transmissions on the same frequency resource may not be feasible. One way to handle the interference problem is to operate the relay such that the relay is not transmitting to mobile stations when the relay is supposed to receive data from the donor base station (i.e., to create gaps in the relay-to-MS transmission). In LTE systems, these gaps may be created by configuring multicast broadcast multimedia services (MBMS) single frequency network (MBSFN) subframes as exemplified in 3GPP Technical Report No. 36.814, version 0.4.1, "Further Advancements For E-UTRA Physical Layer Aspects".

The BS-to-relay communication occurs in the MBSFN subframes and the mobile station does not expect to receive data from the relay during this period. However, the relay still needs to send control information to the mobile station, which will occupy one or two symbols, as described in 3GPP Document No. R1-084357, Ericsson, "Efficient Support Of Relays Through MBSFN Subframes". Thus, the relay may receive control information from the BS, as well as transmit control information to the MS, in the same subframe.

In general, there are two ways to address this issue. In one implementation, the network may introducing several OFDM symbols of offset delay between subframes to make sure that the relay receives the PDCCH from the base station, as well as sends the PDCCH to the mobile stations. In another implementation, the network introduces a relay downlink physical control channel (R-PDCCH) from the base station (BS) to the relay station (RS), which coincides with the PDSCH region.

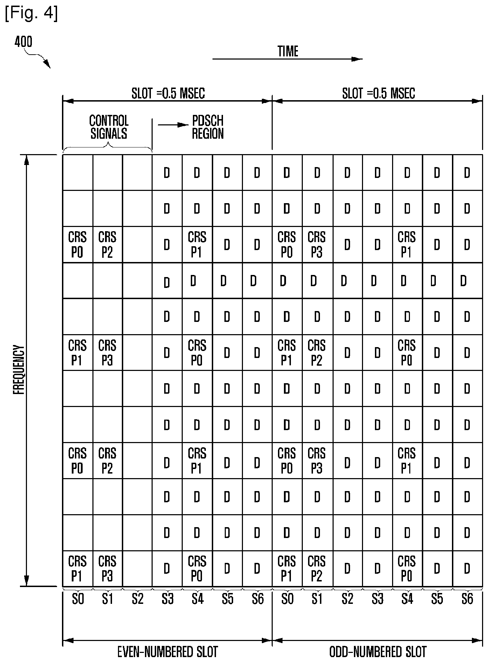

There are two transmission schemes to be considered for R-PDCCH multiplexing: i) TDM/FDM hybrid and ii) pure FDM. Figure 4 shows the conceptual TDM/FDM hybrid and pure FDM R-PDCCH structures. There are advantages and disadvantages to both schemes. One disadvantage to the pure FDM approach is the delay at the relay station. This is due to the fact that a relay buffers the relay physical downlink shared channel (R-PDSCH) when decoding the R-PDCCH. This results delay and large buffer occupancy at the relay. One solution divides the physical resource block (PRB) into several sets of resource elements in the time domain. Each set of resource elements corresponds to a physical control channel element (P-CCE). Accordingly, DL grants and UL grants may be assigned to different physical CCEs.

In an example of dividing a physical resource block (PRB) into two P-CCEs, the slot boundary may be used to partition the two sets. It is noted that in conventional LTE systems, a subframe comprises two slots, where each slot may comprise, by way of example, seven (7) OFDM symbols. In such an embodiment, the mobile station demodulates the data resource elements belonging to the first slot using only the reference signal resource elements (RS REs) within the first set, while demodulating the data resource elements belonging to the second slot using only using the RS REs within the second set. The precoders for the RS REs of the same PRB may potentially be different.

In Release 8 (Rel-8) of LTE, PDCCH blocks are multiplexed and interleaved as specified in 3GPP Technical Report No. 36.211, version 9.0.0, "Physical Channels And Modulation". The details of multiplex and interleaving are particularly described in Section 6.8.2, entitled "PDCCH Multiplexing And Scrambling", Section 6.8.3, entitled "Modulation", Section 6.8.4, entitled "Layer Mapping And Precoding", and Section 6.8.5, entitled "Mapping To Resource Elements".

As the sections identified above illustrate, Rel-8 PDCCH multiplexing and interleaving, downlink (DL) grants and uplink (UL) grants are not differentiated. Thus, the DL and UL grants share the same MS-specific search space. Thus, there is a need in the art for improved techniques for designing the search space of the R-PDCCH and interleaving data in the R-PDCCH in order to mitigate overhead and delay problems in the backhaul link between a relay station and a base station.

MOTOROLA: "Relay Backhaul Design", 3GPP DRAFT; R1 -093968, 3rd GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 12 October 2009, XP050388461 discloses to target the RPDCCH design to support a reasonable number of relays, and that it may be possible to have an RN-specific RPDCCH region. Each RN blindly decodes it RPDCCH in a subset of PRBs in the assigned subframes.

NEC GROUP: "Issues on Relay type 1 control design", 3GPP DRAFT; R1-093863, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 12 October 2009, XP050388368, discloses to assume different R-PDCCHs are multiplexed and interleaved (i.e. common R-PDCCH control channel). The R-PDCCH may assign downlink resources and uplink resources.

SAMSUNG: "R-PDCCH multiplexing and search space", 3GPP DRAFT; R1-100135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 12 January 2010, XP050417860, discloses an R-PDCCH multiplexing structure.

MOTOROLA: "Search Space Definition for L1/L2 Control Channels", 3GPP TSG RAN1 #50, vol. R1 -073373, no. 50, 20 August 2007, pages 1-11, XP002512720, discloses "By choosing K appropriately (e.g. K=8) and having a UE primarily monitor one PDCCH search space for the downlink scheduling grant (SG) format and another for the uplink scheduling grant format then the maximum number of PDCCH blind detections required can be constrained to be no more than 40."

MOTOROLA: "Search Space Definition: Reduced PDCCH Blind Detection for Split PDCCH Search Space", 3GPP DRAFT; R1-080079, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 9 January 2008, XP050108617, discloses a method of splitting a 8 CCE DL or 8 CCE UL PDCCH search space.

### [Disclosure of Invention]

### [Solution to Problem]

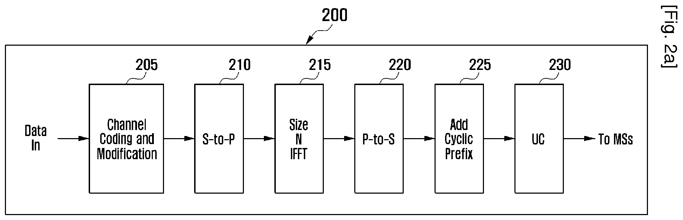

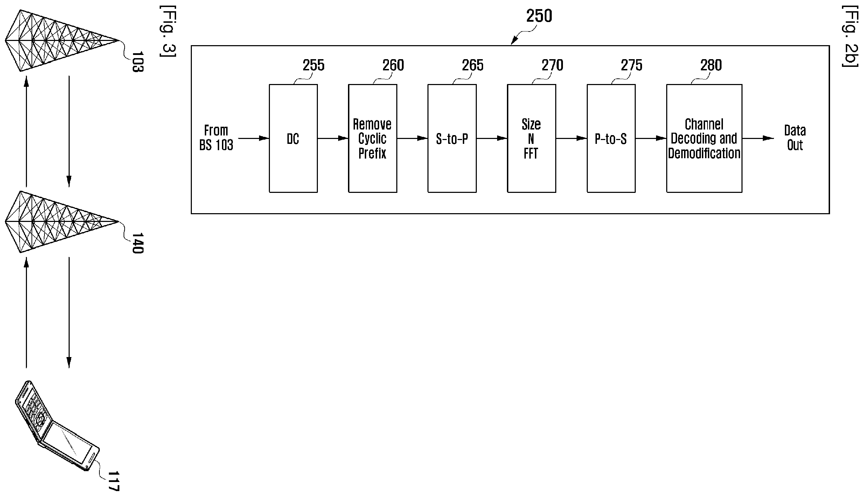

The invention is defined and limited only by the scope of appended claims 1-8. In what follows, any reference to embodiments not falling within the scope of said claims are to be interpreted as examples useful for understanding the invention. In particular, the embodiments relating to figures 2, 7 and 11-14 are not according to the invention and are present for illustration purposes only.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### [Brief Description of Drawings]

For a more complete understanding of the present disclosure and its advantages, reference is now made to the following description taken in conjunction with the accompanying drawings, in which like reference numerals represent like parts:
FIGURE 1 illustrates an exemplary wireless network that is suitable for operating relay stations according to exemplary embodiments of the present disclosure;
FIGURES 2a and 2b are high-level diagrams of an exemplary relay station according to one embodiment of present disclosure;
FIGURE 3 illustrates wireless transmissions in the uplink and downlink between a base station and a mobile station via a relay station according to one embodiment of the disclosure;
FIGURE 4 illustrates an exemplary resource block (RB) in a 3GPP LTE system;
FIGURE 5 illustrates a downlink physical resource grid that supports relay station embodiments of the disclosure;
FIGURE 6 illustrates a procedure for interleaving and mapping UL and DL grants in one embodiment of the disclosure;
FIGURE 7 illustrates the structure of the R-PDCCH in which different relay stations are multiplexed according to one embodiment of the present disclosure;
FIGURE 8 illustrates the structure of the R-PDCCH according to another embodiment of the present disclosure;
FIGURE 9 illustrates the structure of the R-PDCCH for different relay stations multiplexed according to one embodiment of the present disclosure;
FIGURE 10 illustrates a procedure for interleaving and multiplexing uplink and downlink grants according to an exemplary embodiment of the present disclosure;
FIGURE 11 illustrates a procedure for interleaving and multiplexing uplink and downlink grants according to an exemplary embodiment of the present disclosure;
FIGURE 12 illustrates a procedure for interleaving and multiplexing downlink grants according to an exemplary embodiment of the present disclosure;
FIGURE 13 illustrates the structure of the R-PDCCH for interleaving based on R-REG elements according to one embodiment of the present disclosure; and
FIGURE 14 illustrates a search procedure in an exemplary relay station according to one embodiment of the disclosure.

### [Mode for the Invention]

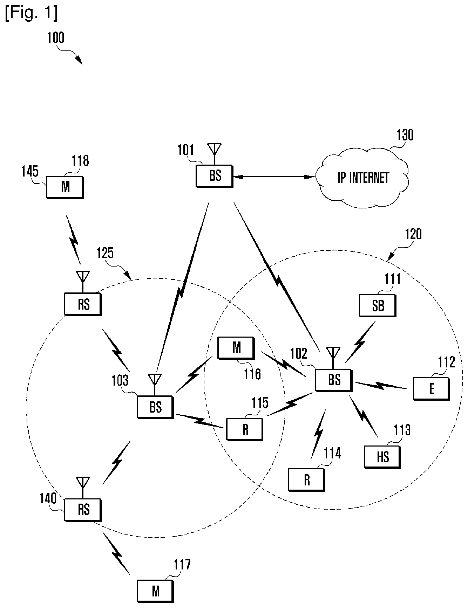

FIGURES 1 through 14, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless network.

FIGURE 1 illustrates exemplary wireless network 100 that is suitable for operating relay stations according to exemplary embodiments of the present disclosure. In the illustrated embodiment, wireless network 100 includes base station (BS) 101, base station (BS) 102, and base station (BS) 103. Base station 101 communicates with base station 102 and base station 103. Base station 101 also communicates with Internet protocol (IP) network 130, such as the Internet, a proprietary IP network, or other data network.

Depending on the network type, other well-known terms may be used instead of "base station," such as "eNodeB" or "access point". For the sake of convenience, the term "base station" shall be used herein to refer to the network infrastructure components that provide wireless access to remote terminals.

Base station 102 provides wireless broadband access to network 130, via base station 101, to a first plurality of mobile stations within coverage area 120 of base station 102. The first plurality of mobile stations includes mobile station (MS) 111, mobile station (MS) 112, mobile station (MS) 113, mobile station (MS) 114, mobile station (MS) 115 and mobile station (MS) 116. In an exemplary embodiment, MS 111 may be located in a small business (SB), MS 112 may be located in an enterprise (E), MS 113 may be located in a WiFi hotspot (HS), MS 114 may be located in a first residence (R), MS 115 may be located in a second residence, and MS 116 may be a mobile (M) device.

For sake of convenience, the term "mobile station" is used herein to designate any remote wireless equipment that wirelessly accesses a base station, whether or not the mobile station is a truly mobile device (e.g., cell phone) or is normally considered a stationary device (e.g., desktop personal computer, vending machine, etc.). Other well-known terms may be used instead of "mobile station", such as "subscriber station (SS)", "remote terminal (RT)", "wireless terminal (WT)", "user equipment (UE)", and the like.

Base station 103 provides wireless broadband access to IP network 130, via base station 101, to a second plurality of mobile stations within coverage area 125 of base station 103. The second plurality of mobile stations includes mobile station 115 and mobile station 116. As will be explained below in greater detail, BS 103 also communicates indirectly with mobile station 117 via relay station (RS) 117. In alternate embodiments, base stations 102 and 103 may be connected directly to IP network 130 by means of a wireline broadband connection, such as an optical fiber, DSL, cable or T1/E1 line, rather than indirectly through base station 101.

In other embodiments, base station 101 may be in communication with either fewer or more base stations. It is noted that mobile station 115 and mobile station 116 are on the edge of both coverage area 120 and coverage area 125. Mobile station 115 and mobile station 116 each communicate with both base station 102 and base station 103 and may be said to be operating in handoff mode, as known to those of skill in the art.

In an exemplary embodiment, base stations 101-103 may communicate with each other and with mobile stations 111-116 in at least the downlink using orthogonal frequency division multiplexing (OFDM) protocol, according to the proposed 3GPP LTE standard, or an equivalent advanced 3G or 4G standard.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

In a preferred embodiment, the coverage area of at least base station 103 is enhanced by means of relay station (RS) 140 and relay station 145, which operate according to the principles of the present disclosure. Relay station 140 provides communications with mobile station 117 and other mobile stations (not shown). Relay station 145 provides communications with mobile station 118 and other mobile stations (not shown).

FIGURE 3 illustrates wireless transmissions in the uplink and downlink between base station 103 and mobile station 117 via relay station 140 according to one embodiment of the present disclosure. RS 140 provides mobile station (MS) 117 and other mobile stations (not shown) with wireless access to BS 103. RS 140 receives frames of downlink traffic from BS 103 and retransmits the received frames of downlink traffic at increased power to MS 117. RS 140 also receives frames of uplink traffic from MS 117 and retransmits the received frames of uplink traffic at increased power to BS 103.

FIGURES 2a and 2b are high-level diagrams of exemplary relay station 140 according to one embodiment of present disclosure. RS 140 comprises transmit path circuitry 200 and receive path circuitry 250. Transmit path circuitry 200 comprises channel coding and modulation block 205, serial-to-parallel (S-to-P) block 210, Size N Inverse Fast Fourier Transform (IFFT) block 215, parallel-to-serial (P-to-S) block 220, add cyclic prefix block 225, up-converter (UC) 230, and timing offset controller 240. Receive path circuitry 250 comprises down-converter (DC) 255, remove cyclic prefix block 260, serial-to-parallel (S-to-P) block 265, Size N Fast Fourier Transform (FFT) block 270, parallel-to-serial (P-to-S) block 275, and channel decoding and demodulation block 280.

In transmit path circuitry 200, channel coding and modulation block 205 receives a set of information bits and modulates the input bits (e.g., QAM) to produce a sequence of frequency-domain modulation symbols. The information bits include, among other things, a relay station identifier (RD ID) and other parameters associated with RS 140. The information bits also include reference control signals (e.g., pilot symbols and the like) that are to be transmitted to mobile stations, as well as data traffic previously received from base station 103.

Serial-to-parallel block 210 converts (i.e., de-multiplexes) the serial symbols to parallel data to produce N parallel symbol streams where N is the IFFT/FFT size used in transmit path circuitry 200 and receive path circuitry 250. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal.

Finally, up-converter 230 modulates (i.e., up-converts) the output of add cyclic prefix block 225 to RF frequency for transmission via a wireless channel. The signal may also be filtered at baseband before conversion to RF frequency. In an exemplary embodiment, the time-domain output transmitted by transmit path circuitry 200 may be transmitted via multiple antennas to mobile stations within range of RS 140.

Receive path circuitry 250 receives incoming downlink signals transmitted by base station 103. Down-converter 255 down-converts the received signal to baseband frequency and remove cyclic prefix block 260 removes the cyclic prefix to produce a serial time-domain baseband signal. Serial-to-parallel block 265 converts the time-domain baseband signal to parallel time domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and decodes the date symbols to recover the original data stream transmitted by BS 103. The original date stream is eventually transferred to transmit path circuitry 200 to be re-transmitted to mobile station 117 and other mobile stations.

Those skilled in the art with readily understand that base stations 101-103 and mobile stations 111-118 comprise transmit path circuitry and receive path circuitry that are analogous to transmit path circuitry 200 and receive path circuitry 250 described above with respect to relay station 140. However, for the sake of brevity, redundant descriptions of the circuit architecture of base stations 101-103 and mobile stations 111-118 will be omitted.

FIGURE 4 illustrates exemplary resource block (RB) 400 in a 3GPP LTE system (e.g., Rel. 8 or Rel. 10). Resource block 400 depicts part of a physical downlink shared channel (PDSCH) of a subframe. The horizontal axis indicates time. The vertical axis indicates frequency. In FIGURE 4, each OFDM symbol is aligned vertically. The squares in each vertical column represent different subcarrier frequencies that are part of the same OFDM symbol. The squares in each horizontal row represent the same subcarrier frequency in different OFDM symbols. Thus, each square represents a time-frequency resource element (RE) that may be individually modulated to transmit information.

Each OFDM symbol comprises N sequential subcarriers, where N may be, for example, 512, 1024, 2048, and so forth. As noted, each subcarrier may be individually modulated. For practical reasons, only a small segment of each OFDM symbol may be shown for resource block (RB) 400 in FIGURE 4. Exemplary RB 400 spans an exemplary one (1) millisecond subframe, where each subframe comprises two (2) slots, each equal to 0.5 milliseconds in duration. The subframe contains 14 sequential OFDM symbols, so that each slot contains 7 sequential OFDM symbols. The 7 OFDM symbols in each slot are labeled S0, S1, S2, S3, S4, S5, and S6. However, this is by way of example only and should not be construed to limit the scope of the present disclosure. In alternate embodiments, the slots may be greater than or less than 0.5 milliseconds in duration and a subframe may contain more than or less than 14 OFDM symbols.

In the exemplary embodiment, RB 400 spans 12 sequential subcarriers in the frequency dimension and 14 OFDM symbols in the time dimension. Thus, RB 400 contains 168 time-frequency resources. Again, however, this is by of example only. In alternate embodiments, RB 400 may span more than or less than 12 subcarriers and more than or less than 14 OFDM symbols, so that the total number of resource elements (REs) in RB 400 may vary. In a multi-antenna system, such as a multiple-input, multiple-output (MIMO) base station, the subcarriers labeled "CRS P0", "CRS P1", "CRS P2", and "CRS P3" represent cell-specific reference signals (e.g., pilot signals) for a particular antenna port. Thus, for example, CRS P0 is the cell-specific reference signal (CRS) for antenna port 0.

The resource elements that carry user data (as opposed to reference signals) in RB 400 are labeled "D". By way of example, OFDM symbol S3 in the even-numbered slot in FIGURE 4 does not contain a CRS RE. Each RE in OFDM symbol S3 is labeled D to indicated user data.

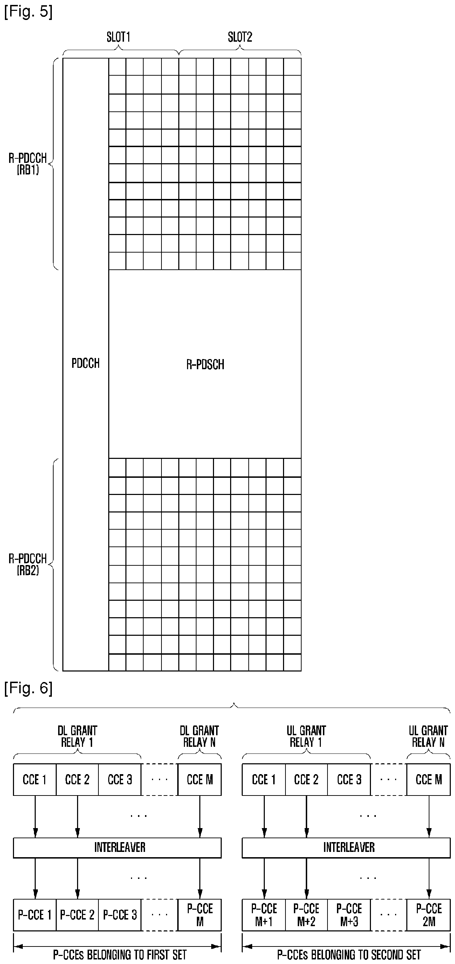

FIGURE 5 illustrates a downlink physical resource grid that supports relay stations according to exemplary embodiments of the present disclosure. The downlink physical resource grid shows a portion of a subframe including a first time slot (Slot 1) and a second time slot (Slot 2). The relay physical downlink control channel (R-PDCCH) spans at least a first resource block (RB1) and a second resource block (RB2). RB1 and RB2 are separated by a resource block associated with a relay physical downlink shared channel (R-PDSCH). As in the case of FIGURE 4, the vertical axis indicates frequency and the horizontal axis indicates time. Also, as in the case of FIGURE 4, only a limited segment of the vertically-aligned OFDM symbols may be illustrated for practical reasons. Therefore, it will be understood by those skilled in the art that the R-PDCCH may include other resource blocks aligned vertically in Slot 1 and Slot 2 that are not shown.

R-PDCCH multiplexing is composed of several key elements: search space, interleaving and mapping to resource elements. The present disclosure addresses these with an improved technique for multiplexing R-PDCCHs in the base stations and relay stations in wireless network 100. In Release 10 of LTE, it is agreed that mobile stations and relay stations will decode the R-PDSCH based on demodulation reference signal (DM-RS) resource elements, which are one kind of dedicated reference signal (DRS). In the backhaul link, in order to take advantage of the TDM/FDM structure of R-PDCCH, the DM-RS resource associated with different slots could be potentially precoded by different precoders. In FIGURE 6, different sets of DM-RS resource elements could be precoded by different precoders.

In one embodiment of the present disclosure, channel control elements (CCEs) in the logic domain are divided into several disjoint sets, where each set corresponds to an individual search space. Furthermore, each search space is interleaved independently and mapped to different physical channel control elements (P-CCEs). For example, in the logic domain, a total of 2M CCEs may be divided into two disjoint sets (e.g., Set 1 and Set 2) where each set comprises M channel control elements. Each logic CCE set is associated with a search space.

The logic domain CCEs of the first set (i.e., Set 1) are interleaved and mapped to the physical CCEs (P-CCEs) associated with the first set, while the logic CCEs of the second set (i.e., Set 2) are interleaved and mapped to the P-CCEs associated with the second set. By way of example, in FIGURE 5, the P-CCEs of the first set may be mapped to the resource elements of Slot 1 and the P-CCEs of the second set may be mapped to the resource elements in Slot 2.

FIGURE 6 illustrates a procedure for interleaving and mapping logic domain CCEs to physical CCEs according to an exemplary embodiment of the present disclosure. In FIGURE 6, common control information (not shown), as well as downlink (DL) grants of different relay stations, are multiplexed in the search space associated with a first set (Set 1), while the uplink (UL) grants of different relay stations are multiplexed in the search space associated with a second set (Set 2).

By way of example, a DL grant for Relay 1 is assigned or allocated to logic-domain channel control elements CCE1, CCE2 and CCE3 associated with a first set, and a DL Grant for Relay n is assigned or allocated to at least logic domain channel control element CCE M associated with the first set. An interleaver then interleaves the DL grants in CCE1 ?CCE M into P-CCE1 - P-CCE M associated with a first set of P-CCEs.

Similarly, an UL grant for Relay 1 is assigned or allocated to logic domain channel control elements CCE1, CCE2 and CCE3 associated with a second set, and an UL Grant for Relay n is assigned or allocated to at least logic domain channel control element CCE M associated with the second set. An interleaver then interleaves the UL grants in CCE1-CCE M into P-CCE1 - P-CCE M associated with a second set of P-CCEs.

As FIGURE 6 demonstrates, the common control information and the DL grants for different relay stations are multiplexed and interleaved in one set, while the UL grants for different relay stations are multiplexed and separately interleaved in a second set.

In general, there are three search spaces associated with the method of the present disclosure: 1) common control search space; 2) relay station-specific DL grant search space; and 3) relay station-specific UL grant search space.

In order to receive the R-PDCCH from the base station, a relay station performs a blind decode (BD) based on the hypothesis of CCE aggregation levels for different search spaces. For example, a relay station performs a blind decode for common control information in the search space associated with Set 1, performs a blind decode for the DL grants in the search space associated with Set 1, and performs a blind decode for the UL grants for the search space associated with Set 2.

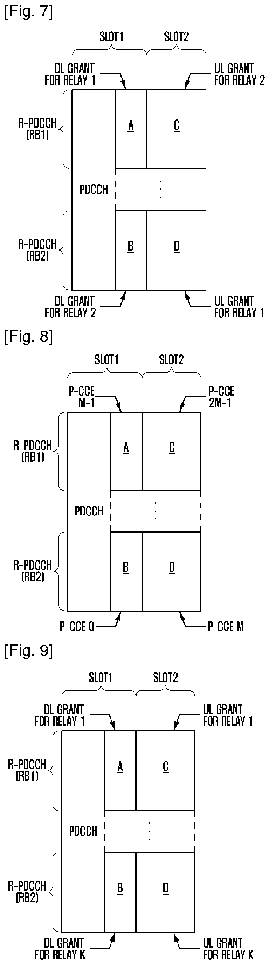

FIGURE 7 illustrates the structure of the R-PDCCH in which different relay stations are multiplexed according to one embodiment of the present disclosure. In FIGURE 7, the CCE aggregation level of the DL grants and UL grants may be different and the corresponding DCI format sizes may be the same or different. By way of example, the DL grant for a first relay station (Relay 1) is carried in P-CCEs associated with the region labeled A in a first resource block (RB1) in a first time slot (Slot 1). The DL grant for a second relay station (Relay 2) is carried in P-CCEs associated with the region labeled B in a second resource block (RB2) in Slot 1.

However, the UL grant for Relay 2 is carried in P-CCEs associated with the region labeled C in the first resource block (RB1) in a second time slot (Slot 2). The UL grant for Relay 1 is carried in P-CCEs associated with the region labeled D in the second resource block (RB2) in the Slot 2.

FIGURE 8 illustrates the structure of the R-PDCCH according to another embodiment of the present disclosure. In FIGURE 8, the R-PDCCH is configured to have the same aggregation level for DL grant and UL grant for a particular relay station. As in FIGURE 7, the downlink grants together with common control information are multiplexed and interleaved into one search space, while the uplink grants are multiplexed and interleaved into another disjoint search space. Furthermore, the search space for the DL grant and the UL grant for a particular relay station are linked.

By way of example, assume the 2M logical CCEs are numbered from 0 through 2M-1, where the numbering of the P-CCEs follows the rule of frequency (i.e., subcarrier) first and then time (i.e., OFDM symbol). For the case where there are total 2M P-CCEs, the P-CCE numbers are illustrated as in FIGURE 9. In FIGURE 9, the first M P-CCEs, namely P-CCE 0 through P-CCE M-1, are aligned vertically (from top to bottom) in the resource blocks in Slot 1. Similarly, the second M P-CCEs, namely P-CCE M through P-CCE 2M-1, are aligned vertically (from top to bottom) in the resource blocks in Slot 2.

FIGURE 9 illustrates the structure of the R-PDCCH for different relay stations multiplexed according to one embodiment of the present disclosure. After interleaving, for relay station i, if the downlink grant is assigned or allocated to P-CCE iₖ₁ through P-CCE iₖ₂, then the corresponding uplink grant for relay station i is assigned to P-CCE i_{k1+M} through P-CCE i_{k2+M}. In such a case, the uplink grant and the downlink grant for the same relay station are carried in resource elements in the same physical resource (RB). By way of example, in FIGURE 9, the uplink grant and the downlink grant for Relay 1 are both assigned or allocated to resource block RB1, but in different time slots. Advantageously, this configuration in FIGURE 9 may potentially reduce the number of blind decodes that are required.

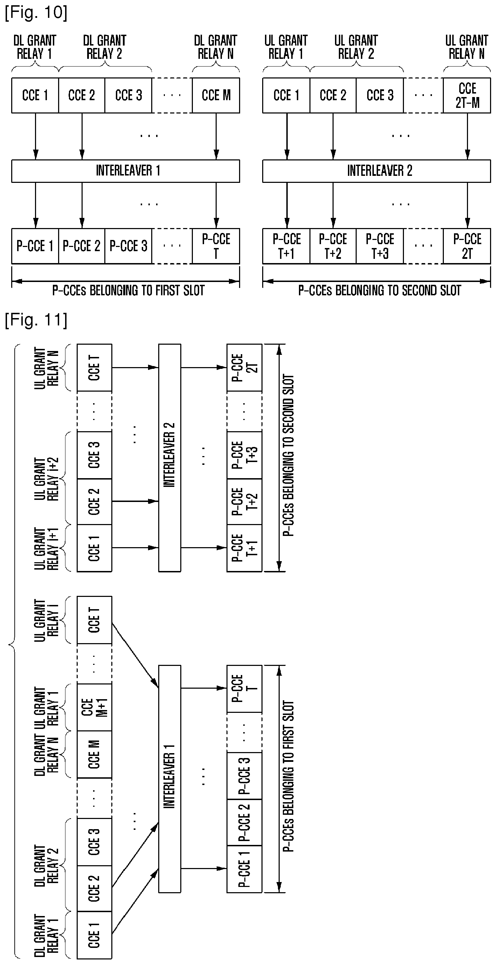

FIGURE 10 illustrates a procedure for interleaving and multiplexing uplink and downlink grants according to an exemplary embodiment of the present disclosure. In the illustrated embodiment, the P-CCEs are divided into two sets, where each set comprises half of the total number of P-CCEs in the system. By way of example, a total of "T" P-CCEs (i.e., P-CCE1 to P-CCE T) are in the first set (and time slot) and a total of "T" P-CCEs (i.e., P-CCE T+1 to P-CCE 2T) are in the second set. Common control information (not shown) and the DL grants in the logic-domain CCEs are interleaved and mapped only into the P-CCEs in the first set, while the UL grants are independently interleaved and mapped to P-CCEs in both sets.

FIGURE 11 illustrates a procedure for interleaving and multiplexing uplink and downlink grants according to an exemplary embodiment of the present disclosure. In the illustrated embodiment, the P-CCEs are divided into two sets, where each set comprises half of the total number of CCEs in the system. The CCEs in the logic domain are also divided into two sets of equal size. The common control information (not shown) and downlink grants (DLG), as well as some of the uplink grants (ULG) are assigned or allocated to the first set of the logic-domain CCEs (i.e., CCE1 to CCE M). The logic-domain CCE are interleaved and mapped to P-CCEs associated with the first set (i.e., P-CCE1 to P-CCE T). The remaining relay station-specific uplink control information is multiplexed, interleaved, and mapped to the P-CCEs belong to the second set (i.e., P-CCE T+1 to P-CCE 2T).

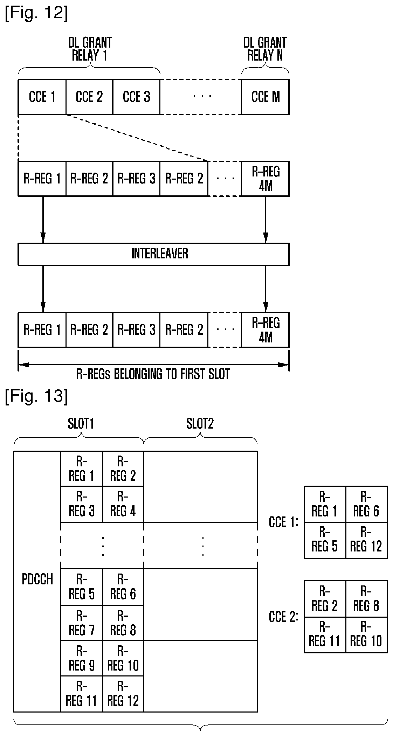

FIGURE 12 illustrates a procedure for interleaving and multiplexing downlink grants according to an exemplary embodiment of the present disclosure. In the illustrated embodiment, interleaving is based on R-REG elements, in which both the logic-domain CCEs and the P-CCEs in the physical resource blocks are further divided into several R-REG elements. Using similar methods to those shown in the previous embodiments, the multiplexing of downlink control information is based on CCE level, while the interleaving is based on R-REG level.

For example, the common control information (not shown) together with downlink grants (DLG) for multiple relay stations are multiplexed at the logic-domain CCE level and are further divided into R-REG elements. The R-REG elements are then interleaved and mapped to R-REG elements of the P-CCEs associated with the first set (first time slot), while the other downlink control information (i.e., UL grants) are multiplexed, interleaved and mapped to the P-CCEs associated with the second set (not shown).

FIGURE 13 illustrates the underlying physical resource structure for interleaving based on R-REG elements according to one embodiment of the present disclosure. In FIGURE 13, each CCE and P-CCEs is divided into four (4) R-REG elements and interleaving occurs on the R-REG level. For the case shown in FIGURE 13, each CCE may potentially be precoded by four different precoding vectors, thus increasing the diversity.

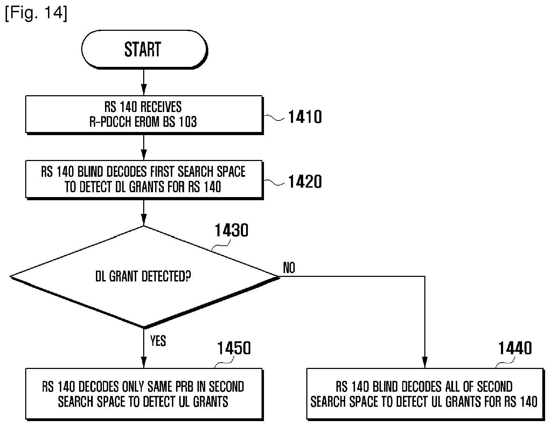

FIGURE 14 illustrates a search procedure in an exemplary relay station according to one embodiment of the disclosure. In particular, the search procedure is associated with the embodiment in FIGURE 9, in which downlink (DL) grants and uplink (UL) grants are transmitted from the base station to the relay station in the same physical resource block (PRB).

Initially, base station (BS) 103 transmits a R-PDCCH to relay station (RS) 140. It is assumed that, if DL grants and UL grants are begin transmitted to RS 140, then BS 104 allocates and interleaves the UL and DL grants such that the DL grants and UL grants are in the same physical resource block (PRB) within the R-PDCCH.

During routine operation, RS 140 receives the R-PDCCH from BS 103 (step 1410). RS 104 does not know whether DL grants or UL grants intended for RS 140 are in the R-PDCCH. Therefore, RS 140 blind decodes the first search space in order to detect DL grants for RS 140. The first search space is assumed to be the first slot (Slot 1) in FIGURE 9 (step 1420).

After blind decoding the first search space, RS 140 determines whether a DL grant directed to RS 140 has been detected (step 1430). If no such DL grant has been detected (i.e., NO in step 1430), then RS 140 must blind decode the entire second search space in order to detect an uplink (UL) grant directed to RS 140 (step 1440). This means that RS 140 must search for an UL grant in all of the physical resource blocks (PRBs) in the second search space (i.e., Slot 2).

However, if RS 140 does detect a DL grant directed to RS 140 in the first search space (i.e., YES in step 1430), then RS 140 only decodes the resource elements in the same PRB in the second search space in order to detect an uplink (UL) grant directed to RS 140 (step 1450). By way of example, in FIGURE 9, if RS 140 detected a DL grant directed to RS 140 in the region labeled "A" in physical resource block (RB1) in the first search space (Slot 1), then RS 140 only decodes the resource elements in the region labeled "C" in RB1 in the second search space (Slot 2) in order to detect an UL grant directed to RS 140. Advantageously, this greatly reduces decoding complexity in RS 140.

### [Industrial Applicability]

Although the present disclosure has been described with an exemplary embodiment, various changes and modifications may be suggested to one skilled in the art. It is intended that the present disclosure encompass such changes and modifications as fall within the scope of the appended claims.

## Claims

1. A wireless network system comprising:
a first base station (103) configured to communicate with mobile stations (117); and
a plurality of relay stations (140) for providing bi-directional communication between the first base station (103) and a plurality of mobile stations (117),
wherein the first base station (103) is configured to transmit a relay physical downlink control channel, R-PDCCH, in the downlink to the plurality of relay stations (140), the R-PDCCH comprising: i) a first search space for downlink, DL, grants associated with the plurality of relay stations in a first time slot; and ii) a second search space for uplink, UL, grants associated with the plurality of relay stations in a second time slot, and
wherein each, the DL grants and the UL grants are interleaved respectively, and separately mapped to a resource in the first time slot and a resource in the second time slot respectively,
wherein the first base station (103) is configured to transmit a first DL grant directed to a first relay station (140) in a first physical resource block located in the first search space, and
wherein the first base station is configured to transmit a first UL grant directed to the first relay station in the first physical resource block located in the second search space.

2. The wireless network as set forth in Claim 1, wherein the first base station (130) is configured to transmit the first DL grant directed to the first relay station (140) in first resource elements in a first region of the first physical resource block and transmit the first UL grant directed to the first relay station in second resource elements that are determined by the location of the first resource elements associated with the first DL grant.

3. A method in a wireless network system comprising a first base station configured to communicate with mobile stations; and a plurality of relay stations for providing bi-directional communication between the first base station and a plurality of mobile stations, the method comprising the step of:
transmitting (1410) from the first base station to the plurality of relay stations a relay physical downlink control channel, R-PDCCH, in the downlink, the R-PDCCH comprising: i) a first search space for downlink, DL, grants associated with the plurality of relay stations in a first time slot; and ii) a second search space for uplink, UL, grants associated with the plurality of relay stations in a second time slot, and
wherein each, the DL grants and the UL grants are interleaved respectively, and separately mapped to a resource in the first time slot and a resource in the second time slot respectively,
wherein the step of transmitting (1410) comprises transmitting from the first base station a first DL grant directed to a first relay station in a first physical resource block located in the first search space and transmitting a first UL grant directed to the first relay station in the first physical resource block located in the second search space.

4. The method as set forth in Claim 3, wherein the step of transmitting further comprises transmitting (1410) the first DL grant directed to the first relay station in first resource elements in a first region of the first physical resource block and transmitting the first UL grant directed to the first relay station in second resource elements that are determined by the location of the first resource elements associated with the first DL grant.

5. A relay station in a wireless network system comprising a plurality of base stations (103) configured to communicate with mobile stations, that provides bi-directional communication between a first base station among the plurality of base stations and a plurality of mobile stations (117), wherein the relay station is configured to receive in the downlink from the first base station a relay physical downlink control channel, R-PDCCH, the R-PDCCH comprising: i) a first search space for downlink, DL, grants associated with a plurality of relay stations in a first time slot; and ii) a second search space for uplink, UL, grants associated with the plurality of relay stations in a second time slot and wherein the relay station is configured to decode DL grants associated with the relay station and to decode UL grants associated with the relay station, and
wherein the first base station is configured to interleave each, the DL grants and the UL grants respectively, and to separately map the DL grants and the UL grants on a resource in the first time slot and a resource in the second time slot respectively,
wherein the relay station (140) is configured to decode a first DL grant directed to the relay station in a first physical resource block located in the first search space, and
wherein the relay station (140) is configured to decode a first UL grant directed to the relay station in the first physical resource block located in the second search space.

6. The relay station as set forth in Claim 5, wherein the relay station (140) is configured to decode the first DL grant directed to the relay station in first resource elements in a first region of the first physical resource block and to decode the first UL grant directed to the relay station in second resource elements that are determined by the location of the first resource elements associated with the first DL grant.

7. A method in a relay station that provides bi-directional communication between a first base station of a wireless network system and a plurality of mobile stations, the method comprising the steps of:
in the relay station, receiving (1410) in the downlink from the first base station a relay physical downlink control channel, R-PDCCH, the R-PDCCH comprising: i) a first search space for downlink, DL, grants associated with a plurality of relay stations in a first time slot; and ii) a second search space for uplink, UL, grants associated with the plurality of relay stations in a second time slot; and
in the relay station, decoding a DL grant associated with the relay station (1420) and decoding an UL grant associated with the relay station (1440), and
wherein each, the DL grants and the UL grants are interleaved respectively, and separately mapped to a resource in the first time slot and a resource in the second time slot respectively,
wherein the step of decoding comprises decoding a first DL grant directed to the relay station in a first physical resource block located in the first search space and decoding a first UL grant directed to the relay station in the first physical resource block located in the second search space.

8. The method as set forth in Claim 7, wherein the step of decoding comprises decoding the first DL grant directed to the relay station in first resource elements in a first region of the first physical resource block and decoding the first UL grant directed to the relay station in second resource elements that are determined by the location of the first resource elements associated with the first DL grant.

## Patentansprüche

1. Drahtloses Netzsystem, welches Folgendes umfasst:
eine erste Basisstation (103), die konfiguriert ist, um mit mobilen Stationen (117) zu kommunizieren; und
mehrere Relaisstationen (140) zum Bereitstellen bidirektionaler Kommunikation zwischen der ersten Basisstation (103) und mehreren mobilen Stationen (117),
wobei die erste Basisstation (103) konfiguriert ist, um einen physikalischen Relais-Downlink-Steuerkanal, R-PDCCH, in dem Downlink an die mehreren Relaisstationen (140) zu übertragen, wobei der R-PDCCH Folgendes umfasst: i) einen ersten Suchraum für Downlink(DL)-Gewährungen, die mit den mehreren Relaisstationen in einem ersten Zeit-Slot assoziiert sind; und ii) einen zweiten Suchraum für Uplink(UL)-Gewährungen, die mit den mehreren Relaisstationen in einem zweiten Zeit-Slot assoziiert sind, und
wobei die DL-Gewährungen und die UL-Gewährungen jeweils verschachtelt sind und separat einer Ressource in dem ersten Zeit-Slot bzw. einer Ressource in dem zweiten Zeit-Slot zugeordnet werden,
wobei die erste Basisstation (103) konfiguriert ist, um eine erste DL-Gewährung, die an eine erste Relaisstation (140) gerichtet ist, in einem ersten physikalischen Ressourcenblock zu übertragen, der sich in dem ersten Suchraum befindet, und
wobei die erste Basisstation konfiguriert ist, um eine erste UL-Gewährung, die an die erste Relaisstation gerichtet ist, in dem ersten physikalischen Ressourcenblock zu übertragen, der sich in dem zweiten Suchraum befindet.

2. Drahtloses Netz nach Anspruch 1, wobei die erste Basisstation (130) konfiguriert ist, um die erste DL-Gewährung, die an die erste Relaisstation (140) gerichtet ist, in ersten Ressourcenelementen in einem ersten Bereich des ersten physikalischen Ressourcenblocks zu übertragen und die erste UL-Gewährung, die an die erste Relaisstation gerichtet ist, in zweiten Ressourcenelementen zu übertragen, die durch den Standort der ersten Ressourcenelemente bestimmt werden, die mit der ersten DL-Gewährung assoziiert sind.

3. Verfahren in einem drahtlosen Netzsystem, welches eine erste Basisstation umfasst, die konfiguriert ist, um mit mobilen Stationen zu kommunizieren; und mehrere Relaisstationen zum Bereitstellen bidirektionaler Kommunikation zwischen der ersten Basisstation und mehreren mobilen Stationen, wobei das Verfahren den folgenden Schritt umfasst:
Übertragen (1410) eines physikalischen Relais-Downlink-Steuerkanals, R-PDCCH, in dem Downlink von der ersten Basisstation an die mehreren Relaisstationen, wobei der R-PDCCH Folgendes umfasst: i) einen ersten Suchraum für Downlink(DL)-Gewährungen, die mit den mehreren Relaisstationen in einem ersten Zeit-Slot assoziiert sind; und ii) einen zweiten Suchraum für Uplink(UL)-Gewährungen, die mit den mehreren Relaisstationen in einem zweiten Zeit-Slot assoziiert sind, und
wobei die DL-Gewährungen und die UL-Gewährungen jeweils verschachtelt sind und separat einer Ressource in dem ersten Zeit-Slot bzw. einer Ressource in dem zweiten Zeit-Slot zugeordnet werden,
wobei der Schritt des Übertragens (1410) das Übertragen von der ersten Basisstation einer ersten DL-Gewährung, die an eine erste Relaisstation gerichtet ist, in einem ersten physikalischen Ressourcenblock umfasst, der sich in dem ersten Suchraum befindet, und das Übertragen einer ersten UL-Gewährung, die an die erste Relaisstation gerichtet ist, in dem ersten physikalischen Ressourcenblock, der sich in dem zweiten Suchraum befindet.

4. Verfahren nach Anspruch 3, wobei der Schritt des Übertragens ferner das Übertragen (1410) der ersten DL-Gewährung, die an die erste Relaisstation gerichtet ist, in ersten Ressourcenelementen in einem ersten Bereich des ersten physikalischen Ressourcenblocks umfasst, und das Übertragen der ersten UL-Gewährung, die an die erste Relaisstation gerichtet ist, in zweiten Ressourcenelementen, die durch den Standort der ersten Ressourcenelemente bestimmt werden, die mit der ersten DL-Gewährung assoziiert sind.

5. Relaisstation in einem drahtlosen Netzsystem, das mehrere Basisstationen (103) umfasst, die konfiguriert sind, um mit mobilen Stationen zu kommunizieren, die eine bidirektionale Kommunikation zwischen einer ersten Basisstation unter den mehreren Basisstationen und mehreren mobilen Stationen (117) bereitstellen, wobei die Relaisstation konfiguriert ist, um in dem Downlink von der ersten Basisstation einen physikalischen Relais-Downlink-Steuerkanal, R-PDCCH, zu empfangen, wobei der R-PDCCH Folgendes umfasst: i) einen ersten Suchraum für Downlink(DL)-Gewährungen, die mit mehreren Relaisstationen in einem ersten Zeit-Slot assoziiert sind; und ii) einen zweiten Suchraum für Uplink(UL)-Gewährungen, die mit den mehreren Relaisstationen in einem zweiten Zeit-Slot assoziiert sind, und wobei die Relaisstation konfiguriert ist, um DL-Gewährungen zu decodieren, die mit der Relaisstation assoziiert sind, und UL-Gewährungen zu decodieren, die mit der Relaisstation assoziiert sind, und
wobei die erste Basisstation konfiguriert ist, um die DL-Gewährungen bzw. die UL-Gewährungen zu verschachteln und die DL-Gewährungen und die UL-Gewährungen separat einer Ressource in dem ersten Zeit-Slot bzw. einer Ressource in dem zweiten Zeit-Slot zuzuordnen,
wobei die Relaisstation (140) konfiguriert ist, um eine erste DL-Gewährung, die an die Relaisstation gerichtet ist, in einem ersten physikalischen Ressourcenblock zu decodieren, der sich in dem ersten Suchraum befindet, und
wobei die Relaisstation (140) konfiguriert ist, um eine erste UL-Gewährung, die an die Relaisstation gerichtet ist, in dem ersten physikalischen Ressourcenblock zu decodieren, der sich in dem zweiten Suchraum befindet.

6. Relaisstation nach Anspruch 5, wobei die Relaisstation (140) konfiguriert ist, um die erste DL-Gewährung, die an die Relaisstation gerichtet ist, in ersten Ressourcenelementen in einem ersten Bereich des ersten physikalischen Ressourcenblocks zu decodieren, und um die erste UL-Gewährung, die an die Relaisstation gerichtet ist, in zweiten Ressourcenelementen zu decodieren, die durch den Standort der ersten Ressourcenelemente bestimmt werden, die mit der ersten DL-Gewährung assoziiert sind.

7. Verfahren in einer Relaisstation, das bidirektionale Kommunikation zwischen einer ersten Basisstation eines drahtlosen Netzsystems und mehreren mobilen Stationen bereitstellt, wobei das Verfahren die folgenden Schritte umfasst:
in der Relaisstation, Empfangen (1410) eines physikalischen Relais-Downlink-Steuerkanals, R-PDCCH, in dem Downlink von der ersten Basisstation, wobei der R-PDCCH Folgendes umfasst: i) einen ersten Suchraum für Downlink(DL)-Gewährungen, die mit mehreren Relaisstationen in einem ersten Zeit-Slot assoziiert sind; und ii) einen zweiten Suchraum für Uplink(UL)-Gewährungen, die mit den mehreren Relaisstationen in einem zweiten Zeit-Slot assoziiert sind; und
in der Relaisstation, Decodieren einer DL-Gewährung, die mit der Relaisstation (1420) assoziiert ist, und Decodieren einer UL-Gewährung, die mit der Relaisstation (1440) assoziiert ist, und
wobei die DL-Gewährungen und die UL-Gewährungen jeweils verschachtelt sind und separat einer Ressource in dem ersten Zeit-Slot bzw. einer Ressource in dem zweiten Zeit-Slot zugeordnet werden,
wobei der Schritt des Decodierens das Decodieren einer ersten DL-Gewährung, die an die Relaisstation gerichtet ist, in einem ersten physikalischen Ressourcenblock umfasst, der sich in dem ersten Suchraum befindet, und das Decodieren einer ersten UL-Gewährung, die an die Relaisstation gerichtet ist, in dem ersten physikalischen Ressourcenblock, der sich in dem zweiten Suchraum befindet.

8. Verfahren nach Anspruch 7, wobei der Schritt des Decodierens das Decodieren der ersten DL-Gewährung, die an die Relaisstation gerichtet ist, in ersten Ressourcenelementen in einem ersten Bereich des ersten physikalischen Ressourcenblocks umfasst, und das Decodieren der ersten UL-Gewährung, die an die Relaisstation gerichtet ist, in zweiten Ressourcenelementen, die durch den Standort der ersten Ressourcenelemente bestimmt werden, die mit der ersten DL-Gewährung assoziiert sind.

## Revendications

1. Système de réseau sans fil comprenant :
une première station de base (103) configurée pour communiquer avec des stations mobiles (117) ; et
une pluralité de stations de relais (140) pour fournir une communication bidirectionnelle entre la première station de base (103) et une pluralité de stations mobiles (117),
où la première station de base (103) est configurée pour transmettre un canal de commande de liaison descendante physique de relais, R-PDCCH, dans la liaison descendante à la pluralité de stations de relais (140), le R-PDCCH comprenant: i) un premier espace de recherche pour des autorisations de liaison descendante, DL, associées à la pluralité de stations de relais dans un premier intervalle de temps ; et ii) un deuxième espace de recherche pour des autorisations de liaison montante, UL, associées à la pluralité de stations de relais dans un deuxième intervalle de temps, et
où chacune, les autorisations de DL et les autorisations d'UL sont entrelacées respectivement, et mappées séparément à une ressource dans le premier intervalle de temps et à une ressource dans le deuxième intervalle de temps respectivement,
où la première station de base (103) est configurée pour transmettre une première autorisation de DL dirigée à une première station de relais (140) dans un premier bloc de ressources physiques situé dans le premier espace de recherche, et
où la première station de base est configurée pour transmettre une première autorisation d'UL dirigée à la première station de relais dans le premier bloc de ressources physiques situé dans le deuxième espace de recherche.

2. Réseau sans fil selon la revendication 1, où la première station de base (130) est configurée pour transmettre la première autorisation de DL dirigée à la première station de relais (140) dans des premiers éléments de ressource dans une première région du premier bloc de ressources physiques et transmettre la première autorisation d'UL dirigée à la première station de relais dans des deuxièmes éléments de ressource qui sont déterminés par la position des premiers éléments de ressource associés à la première autorisation de DL.

3. Procédé dans un système de réseau sans fil comprenant une première station de base configurée pour communiquer avec des stations mobiles ; et une pluralité de stations de relais pour fournir une communication bidirectionnelle entre la première station de base et une pluralité de stations mobiles, le procédé comprenant l'étape consistant à :
transmettre (1410) à partir de la première station de base à la pluralité de stations de relais un canal de commande de liaison descendante physique de relais, R-PDCCH, dans la liaison descendante, le R-PDCCH comprenant : i) un premier espace de recherche pour des autorisations de liaison descendante, DL, associées à la pluralité de stations de relais dans un premier intervalle de temps ; et ii) un deuxième espace de recherche pour des autorisations de liaison montante, UL, associées à la pluralité de stations de relais dans un deuxième intervalle de temps, et
où chacune, les autorisations de DL et les autorisations d'UL sont entrelacées respectivement, et mappées séparément à une ressource dans le premier intervalle de temps et à une ressource dans le deuxième intervalle de temps respectivement,
où l'étape de transmission (1410) comprend la transmission à partir de la première station de base d'une première autorisation de DL dirigée à une première station de relais dans un premier bloc de ressources physiques situé dans le premier espace de recherche et la transmission d'une première autorisation d'UL dirigée à la première station de relais dans le premier bloc de ressources physiques situé dans le deuxième espace de recherche.

4. Procédé selon la revendication 3, où l'étape de transmission comprend en outre la transmission (1410) de la première autorisation de DL dirigée à la première station de relais dans des premiers éléments de ressource dans une première région du premier bloc de ressources physiques et la transmission de la première autorisation d'UL dirigée à la première station de relais dans des deuxièmes éléments de ressource qui sont déterminés par la position des premiers éléments de ressource associés à la première autorisation de DL.

5. Station de relais dans un système de réseau sans fil comprenant une pluralité de stations de base (103) configurées pour communiquer avec des stations mobiles, qui fournit une communication bidirectionnelle entre une première station de base parmi la pluralité de stations de base et une pluralité de stations mobiles (117), où la station de relais est configurée pour recevoir dans la liaison descendante de la première station de base un canal de commande de liaison descendante physique de relais, R-PDCCH, le R-PDCCH comprenant : i) un premier espace de recherche pour des autorisations de liaison descendante, DL, associées à une pluralité de stations de relais dans un premier intervalle de temps ; et ii) un deuxième espace de recherche pour des autorisations de liaison montante, UL, associées à la pluralité de stations de relais dans un deuxième intervalle de temps et où la station de relais est configurée pour décoder des autorisations de DL associées à la station de relais et pour décoder des autorisations d'UL associées à la station de relais, et
où la première station de base est configurée pour entrelacer chacune, les autorisations de DL et les autorisations d'UL respectivement, et pour mapper séparément les autorisations de DL et les autorisations d'UL à une ressource dans le premier intervalle de temps et à une ressource dans le deuxième intervalle de temps respectivement,
où la station de relais (140) est configurée pour décoder une première autorisation de DL dirigée à la station de relais dans un premier bloc de ressources physiques situé dans le premier espace de recherche, et
où la station de relais (140) est configurée pour décoder une première autorisation d'UL dirigée à la station de relais dans le premier bloc de ressources physiques situé dans le deuxième espace de recherche.

6. Station de relais selon la revendication 5, où la station de relais (140) est configurée pour décoder la première autorisation de DL dirigée à la station de relais dans des premiers éléments de ressource dans une première région du premier bloc de ressources physiques et pour décoder la première autorisation d'UL dirigée à la station de relais dans des deuxièmes éléments de ressource qui sont déterminés par la position des premiers éléments de ressource associés à la première autorisation de DL.

7. Procédé dans une station de relais qui fournit une communication bidirectionnelle entre une première station de base d'un système de réseau sans fil et une pluralité de stations mobiles, le procédé comprenant les étapes consistant à :
dans la station de relais, recevoir (1410) dans la liaison descendante de la première station de base un canal de commande de liaison descendante physique de relais, R-PDCCH, le R-PDCCH comprenant: i) un premier espace de recherche pour des autorisations de liaison descendante, DL, associées à une pluralité de stations de relais dans un premier intervalle de temps ; et ii) un deuxième espace de recherche pour des autorisations de liaison montante, UL, associées à la pluralité de stations de relais dans un deuxième intervalle de temps ; et
dans la station de relais, décoder une autorisation de DL associée à la station de relais (1420) et décoder une autorisation d'UL associée à la station de relais (1440), et
où chacune, les autorisations de DL et les autorisations d'UL sont entrelacées respectivement et mappées séparément à une ressource dans le premier intervalle de temps et à une ressource dans le deuxième intervalle de temps respectivement,
où l'étape de décodage comprend le décodage d'une première autorisation de DL dirigée à la station de relais dans un premier bloc de ressources physiques situé dans le premier espace de recherche et le décodage d'une première autorisation d'UL dirigée à la station de relais dans le premier bloc de ressources physiques situé dans le deuxième espace de recherche.

8. Procédé selon la revendication 7, où l'étape de décodage comprend le décodage de la première autorisation de DL dirigée à la station de relais dans des premiers éléments de ressource dans une première région du premier bloc de ressources physiques et le décodage de la première autorisation d'UL dirigée à la station de relais dans des deuxièmes éléments de ressource qui sont déterminés par la position des premiers éléments de ressource associés à la première autorisation de DL.
